Europäisches Patentamt

European Patent Office

Office européen des brevets

(11) Publication number: **0 261 815 B1**

(12) EUROPEAN PATENT SPECIFICATION

(45) Date of publication of patent specification: **11.03.92**    (51) Int. Cl.⁵: **B29C 51/16**

(21) Application number: **87307677.2**

(22) Date of filing: **28.08.87**

(54) Making automobile body panels having applied carrier films pre-painted with metallic paint.

(30) Priority: **22.09.86 US 881287**

(43) Date of publication of application:
**30.03.88 Bulletin 88/13**

(45) Publication of the grant of the patent:
**11.03.92 Bulletin 92/11**

(84) Designated Contracting States:
**DE FR GB IT**

(56) References cited:
**DE-A- 1 946 820        FR-A- 1 135 933
GB-A- 2 103 468        US-A- 2 418 479
US-A- 3 551 232        US-A- 4 052 241
US-A- 4 496 628        US-A- 4 539 360**

(73) Proprietor: **GENERAL MOTORS CORPORA-
TION
General Motors Building 3044 West Grand
Boulevard
Detroit Michigan 48202(US)**

(72) Inventor: **Short, William T.
18595 Framingham Street
Southfield Michigan 48076(US)**
Inventor: **Mentzer, Charles C.
18843 Medford
Birmingham Michigan 48009(US)**
Inventor: **Cox, Howard W.
2766 Heathfield
Birmingham Michigan 48010(US)**

(74) Representative: **Denton, Michael John et al
Patent Section Vauxhall Motors Limited 1st
Floor Gideon House 26 Chapel Street
Luton Bedfordshire LU1 2SE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

This invention relates to a method of making automobile body panels.

Automobile body panels are traditionally made from sheet metal or plastics material painted with layers of pigmented paints. The painting procedure for these panels requires elaborate facilities, and consequently involves heavy expense. For instance, a large area of floor space area must be maintained in a clean-room environment for the spraying of paint and clear coat, and for the baking and curing of such paint and clear coat on the body panels. Moreover, solvent-based paints have come to be considered undesirable in recent years because of environmental concerns. As a result, the evaporation of such solvents must be strictly controlled.

The colour matching of metallic paints containing metallic flakes has hitherto proved to be a difficult task, because the colour appearance of metallic paints is to a large extent dependent upon the flake orientation in the paint film. The flake orientation, in turn, is dependent upon many processing parameters, including the angle of spraying, the distance of spraying, and the viscosity of the paint being sprayed.

The present invention is concerned with a method of making automobile body panels which permits elimination of the entire painting process in an automobile assembly plant.

To this end a method in accordance with the present invention comprises the combination of features specified in claim 1.

The method in accordance with the present invention thus involves the production of pre-painted carrier films which are then applied to automobile (vehicle) body panels. The method of applying the pre-painted carrier film to an automobile body panel can be automated for a production procedure.

By the use of a method in accordance with the present invention, pre-painted carrier films can be applied to vehicle body panels such that all the body panels mounted on an automobile (or other vehicle) are colour-matched within an acceptable tolerance. This offers the possibility of improving the paint colour match on a vehicle, and even of obtaining a perfect colour match on an automobile when metallic paints are used.

In a preferred embodiment of a method in accordance with the present invention, a method of applying pre-painted carrier films to automobile body panels such that all the body panels have the same colour appearance can be carried out by the use of the following operational steps. Firstly, a layer of a pigmented paint is applied to a plastics film having sufficient thickness and rigidity. A layer of clear coat may optionally be applied on top of the paint layer to further improve the appearance. The uncoated side of this plastics film is coated with a layer of a pressure-sensitive adhesive. This pre-painted carrier film is then heated in an oven to a temperature at which the plastics film has become sufficiently pliable for it to be vacuum-formed. The resulting heated pre-painted film is positioned over a substrate for a body panel in a vacuum-forming device. Air (or like fluid medium) is then withdrawn from under the pre-painted film such that the film wraps around and sticks to the substrate without forming defects such as air bubbles.

In an alternative embodiment, vacuum holes are drilled into a supporting buck for the substrate in such a way that a heated film edge-wraps the substrate so that the edges of the substrate are covered by pre-painted film. After the excess film has been trimmed away from the substrate along the edges of the part, a completed automobile body panel with a painted surface is obtained, ready for assembly to an automobile.

The present invention thereby makes available a method of applying plastics films pre-painted with a paint containing metallic flakes to automobile body panels by adhesive means, whereby the use of the method in accordance with the invention offers potential for the elimination of paint booth operations at automobile assembly plants.

Amongst the prior art, US-A-4 496 628 discloses a laminate for the protection of motor vehicle bodies, for example rocker panels and adjacent parts, from abrasion damage, and US-A-4 052 241 discloses a method of bonding a flexible finish sheet or the like to a contoured substrate in a die cavity by drawing a vacuum through the die cavity to bring the finish sheet into face-to face contact with the contoured substrate.

In the drawings:

Figure 1 is a schematic view of a vacuum-forming arrangement wherein a pre-painted carrier film is stretched over a substrate to be covered;

Figure 2 is a schematic view similar to Figure 1 but showing the effect of applying vacuum from the bottom of a forming box to draw the pre-painted carrier film down on to the substrate;

Figure 3 is a schematic view similar to Figure 1 but showing the pre-painted carrier film completely covering the substrate under the effect of the vacuum;

Figure 4 is a schematic view similar to Figure 1 but showing the pre-painted carrier film drawn down evenly over the edges of the substrate;

Figure 5 is a schematic view showing an alternative embodiment in which a support buck, an inner box and an outer vacuum box are used;

Figure 6 is a schematic view similar to Figure 5 but showing the effect of applying vacuum under the support buck after the inner box has been raised;

Figure 7 is a schematic view similar to Figure 5 but showing a pre-painted carrier film stretched down to cover the substrate and the sides of the inner box; and

Figure 8 is a schematic view similar to Figure 5 but showing the support buck in a lowered position for edge-to-edge wrapping of the substrate.

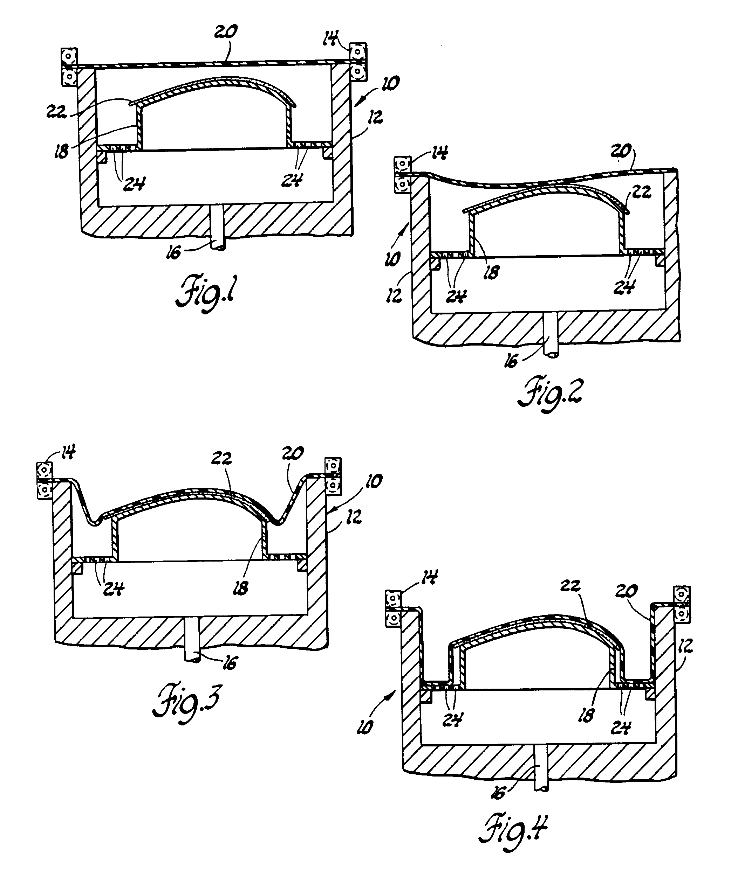

With reference now initially to Figure 1 of the drawings, wherein a vacuum-former 10 is schematically shown, the vacuum-former 10 comprises a vacuum box 12, a stretcher frame 14, a vacuum port 16 and a support buck 18. A pre-painted carrier film 20 is first loaded into the stretcher frame 14 with the paint side up, and a substrate 22 which is to be covered by the pre-painted carrier film 20 is loaded on to the support buck 18. The support buck 18 is mounted on a vacuum plate 24 for the evacuation of air trapped under the pre-painted carrier film 20.

The substrate 22 may be constructed of any suitable material, such as a reaction precursor of polyurethane, a reaction precursor of polyamide (nylon), a glass fibre-reinforced sheet moulding compound, an injection-mouldable thermoplastic material or a metallic material.

Examples of carrier films which have proved suitable are an extruded polyurethane film supplied by Dow Chemical Company, and a thermoplastic polyester film supplied by Eastman Chemical Products. The thickness of the film is approximately 0.25 mm (0.010 inch). The rear surface of the film was coated with a commercial acrylic contact adhesive capable of being activated at a temperature of 138°C (280°F). The carrier films were coated by means of a spray-painting technique with a red maple metallic paint supplied by the PPG Industries under the trade name Durethane 101. The size of the film samples used was approximately 60 cm × 60 cm.

The carrier films were hand-sprayed to an average coating thickness of between 0.025 and 0.10 mm (0.001 and 0.004 inch). The cure conditions used for these pre-painted carrier films were a temperature of 110°C and a time of 30 minutes.

As is shown in Figure 1, the pre-painted carrier film 20 is clamped into the stretcher frame 14, which can be moved horizontally into an oven (not shown) for heating. An oven equipped with quartz heaters can for example be used for rapid heating of the film to a temperature of approximately 149°C (300°F). An optical thermometer is conveniently used to monitor the surface temperature of the film in the oven. Once the surface temperature reaches the desirable forming temperature, the stretcher frame 14 is rapidly moved out of the oven and positioned over the top of the vacuum box 12.

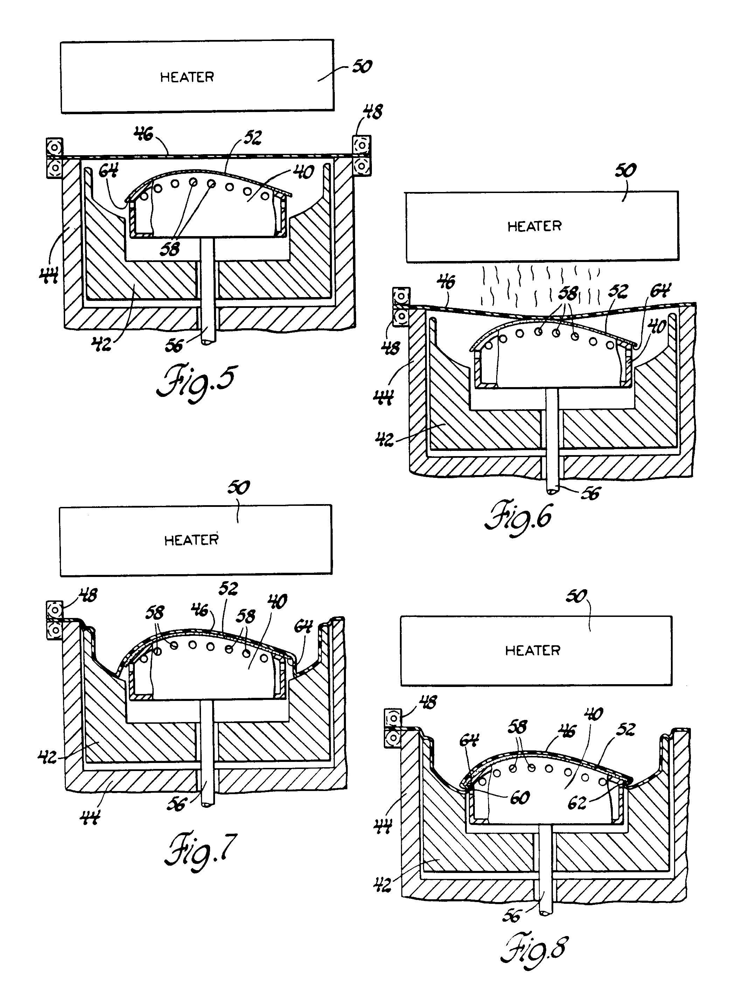

Figure 2 shows a heated pre-painted carrier film 20 sagging from its clamped position into the vacuum box 12. Vacuum is then applied immediately to the bottom of the vacuum box 12 by way of the vacuum port 16, to evacuate air trapped under the carrier film 20.

Figure 3 shows that as air is evacuated from the vacuum box 12, the pre-painted carrier film 20 is drawn down further on to the substrate 22 to cover the entire surface. The carrier film 20 sticks to the substrate on contact of the acrylic adhesive backing.

Figure 4 shows the final stage of the vacuum-forming process, wherein more air is evacuated from the vacuum box 12. The film 20 is thereby drawn down evenly over the edges of the support box 18. The substrate 22 with the pre-painted carrier film 20 adhered to it can be removed from the vacuum box 12, for excess film to be trimmed off along the edges of the substrate.

In the alternative embodiment which is shown in Figures 5 to 8, a movable support buck and a movable inner vacuum box are used instead of the stationary support buck used in the previous embodiment. This is shown in Figure 5, according to which a movable support buck 40 and a movable inner box 42 are mounted inside an outer vacuum box 44. Both the support buck 40 and the inner box 42 are mounted on air cylinders (not shown) which can be moved up and down as desired. Figure 5 also shows a pre-painted carrier film 46 mounted in a stretcher frame 48 which can be moved rapidly into and out of a heater 50.

With reference to Figure 5, at the start of the forming cycle a substrate 52 for a body panel is placed on the support buck 40 with the support buck 40 in its 'up' position. The pre-painted carrier film 46 is prepared essentially as in the previous embodiment. The carrier film 46 is placed under the heater 50 until the surface temperature of the film reaches a temperature of 149°C (300°F) and the film starts sagging. The film is then rapidly moved out of the heater 50 and positioned over the vacuum box 44. The support buck 40 is rapidly raised, such that the carrier film 46 touches the highest point of the substrate 52. Air is withdrawn through the vacuum port 56 to evacuate trapped air under the carrier film 46. The air is evacuated around the edges of the substrate 52 by way of vacuum holes 58 drilled in the top edge of the support buck 40.

Figure 7 shows a condition in which the pre-painted carrier film 46 continues to be drawn down on to the substrate 52, and adheres to it on contact with no air entrapment. As the carrier film 46 reaches the edges of the substrate 52 and continues to be drawn down on to the sides of the support buck 40, a stretched film section is created between the edges of the substrate and the sides of the support buck 40. As is shown in Figure 8, in the final step of the stretch-forming process the support buck 40, with the substrate 52 in position on it, is lowered through a distance of approximately 25 mm (one inch), to cause the stretched carrier film 46 to droop at 60. As air is meanwhile being continuously withdrawn from the cavity between the support buck 40 and the inner box 42, the stretched carrier film 46 is drawn under the substrate 52 at 62, where it adheres on contact to the rear edges 64 of the substrate 52. This last step of the stretch-forming process, wherein the support buck 40 and the substrate 52 are both lowered, accomplishes an important task of edge-wrapping the carrier film to the rear surface of the substrate. This procedure, when carried out in an automated manner, represents a great saving in the manual labour otherwise required to edge-wrap each substrate. The substrate with the pre-painted carrier film adhered to it may then be removed for a trimming operation.

During the vacuum-forming (stretch-forming) process, a deformation of between 30% to 150% has been noted in the stretched carrier film when the film sags after heating and is then drawn by the vacuum action on to the substrate. The contour of the substrate and its orientation largely determine the localised deformation of the carrier film.

Stretching of the paint film on the carrier film causes the metal flakes contained in a metallic paint film to be oriented in such a way as to greatly improve colour uniformity. For instance, when a red metallic urethane paint supplied by PPG Industries (under the trade Durethane 101) was used, the metal flakes contained in the paint layer were oriented in such a way that over 90% of the flakes had a repose angle of less than 10°. The repose angle is measured as the angle between a metal flake and the surface of the paint layer. These data were obtained when a carrier film was deformed to strain values of 22%, 43%, 67%, and 109% at various locations after a vacuum-forming (stretch-forming) process. The percentage of metal flakes having a repose angle of less than 10° is between 92 and 97%. This compares with a much lower percentage, namely 70%, as measured in a carrier film which was not deformed.

By the use of the novel vacuum-forming process in conformity with the present invention, therefore, the colour appearance of a pre-painted carrier film using a metallic paint can be greatly improved. This is significant, since colour-matching of a metallic paint has always been a very difficult task.

When an improvement in the gloss level of a finished product is desired, a thin layer of clear coat may be applied to the pre-painted carrier film either before or after the vacuum-forming process. In a volume production system as used in the automotive industry, it is more desirable for a clear coat to be applied on top of a pre-painted carrier film before the vacuum-forming process.

It is possible for large rolls of carrier film to be coated with a pigmented paint layer and a clear-coat layer and baked through a baking cycle to cure both the paint layer and the clear-coat layer. The resulting roll of coated film may be stored for future use when such colour is required on a vehicle body panel.

The present invention completely avoids the need for the usual paint facilities in an automobile assembly plant, since the pre-painted carrier films may be vacuum-formed directly on to vehicle body panels in a simple and automated procedure.

To summarise, in a preferred embodiment of a method in accordance with the present invention, an external sheet layer 20 is pre-painted with a paint containing metallic flakes on the top surface, and the bottom surface of the external sheet layer 20 is coated with an adhesive layer, whereupon the sheet 20 is drawn by vacuum on to a rigid substrate layer 22. The drawing process aligns all the metal flakes in the paint in one direction, such that the colour appearance thereby conforms to a standard.

## Claims

1. A method of making a plurality of automobile body panels each comprising an external sheet layer (20) and an underlying substrate layer (22), the external sheet layer (20) having a top surface that is painted to a predetermined colour with a paint material capable of withstanding large strain deformations, and a bottom surface that is bonded to the underlying substrate layer (22), such that the colour appearance of the panels conforms substantially to a colour standard when the panels are mounted on a vehicle, the method comprising the steps of:

(a) applying the paint material containing metal flakes to the top surface of the sheet layer (20) and baking for a sufficient length of time to adequately cure the paint;
(b) coating the bottom surface of the sheet layer (20) with a layer of adhesive;
(c) heating the sheet layer (20) to a temperature at which the sheet layer (20) becomes sufficiently pliable for vacuum-forming;
(d) positioning the heated sheet layer (20) over the substrate layer (22) and creating a vacuum underneath the substrate by withdrawing air, or other fluid medium, through vacuum ports (16) located underneath the substrate such that the sheet layer (20) is thereby subjected to a drawing process which aligns substantially all the metal flakes contained in the paint layer, such that the colour appearance of the plurality of panels conforms substantially to a colour standard; and

(e) vacuum-forming the drawn sheet over, and causing the sheet layer (20) to adhere to, the substrate layer (22).

2.  A method acording to claim 1, characterised in that the adhesive used in step (b) is a pressure-sensitive adhesive, and that in step (d) the drawing process is effected to align substantially all the metal flakes contained in the paint layer to a repose angle of less than 10°, such that the plurality of panels all have the same colour appearance.

3.  A method acording to claim 1, characterised in that the adhesive used in step (b) is an adhesive that is activated when heated, and that in step (b) the sheet layer (20) is heated to a temperature at which the adhesive layer has become activated.

**Revendications**

1.  Procédé de fabrication de plusieurs panneaux de carrosserie d'automobile, comprenant chacun une couche externe (20) formant une feuille et une couche sous-jacente de substrat (22), la couche externe (20) ayant une surface supérieure qui est peinte à une couleur prédéterminée avec un matériau de peinture qui peut supporter des déformations importantes sous contrainte, et une surface inférieure qui est collée à la couche sous-jacente (22) de substrat, si bien que l'aspect coloré des panneaux correspond pratiquement à une référence de couleur lorsque les panneaux sont montés sur un véhicule, le procédé comprenant les étapes suivantes :

(a) l'application du matériau de peinture contenant des paillettes métalliques à la face supérieure de la couche (20) formant la feuille et la cuisson pendant un temps suffisant pour que la peinture soit convenablement durcie,

(b) le revêtement de la face inférieure de la couche (20) formant la feuille d'une couche d'adhésif,

(c) le chauffage de la couche (20) formant une feuille à une température à laquelle cette couche (20) devient suffisamment souple pour être mise en forme sous vide,

(d) le positionnement de la couche chauffée (20) sous forme d'une feuille sur la couche (22) du substrat et la création d'une dépression au-dessous du substrat par extraction d'air ou d'un autre fluide par des orifices (16) d'aspiration placés sous le substrat, si bien que la couche (20) en forme de feuille est soumise à une opération d'étirage qui aligne pratiquement toutes les paillettes métalliques contenues dans la couche de peinture si bien que l'aspect coloré de plusieurs panneaux correspond pratiquement à une référence de couleur, et

(e) le formage sous vide de la feuille étirée sur la couche (22) de substrat et le collage de la couche (20) formant la feuille sur ce substrat.

2.  Procédé selon la revendication 1, caractérisé en ce que l'adhésif utilisé dans l'étape (b) est un adhésif sensible à une pression, et, dans l'étape (d), l'opération d'étirage est réalisée afin que toutes les paillettes métalliques contenues dans la couche de peinture soient pratiquement alignées avec un angle de talus inférieur à 10°, si bien que les différents panneaux ont tous le même aspect coloré.

3.  Procédé selon la revendication 1, caractérisé en ce que l'adhésif utilisé dans l'étape (b) est un adhésif qui est activé par chauffage, et, dans l'étape (b), la couche (20) sous forme d'une feuille est chauffée à une température à laquelle la couche d'adhésif a été activée.

**Patentansprüche**

1.  Verfahren zur Herstellung einer Vielzahl von Fahrzeugkarrosserieteilen, von denen jedes eine externe Blattschicht (20) und eine darunterliegende Substratschicht (22) umfaßt, wobei die externe Blattschicht (20) eine obere Außenfläche besitzt, die mit einer vorbestimmten Farbe bemalt ist, mit einem Farbmaterial, das imstande ist, großen Belastungsdeformationen zu widerstehen, und eine untere Außenfläche, die mit der darunterliegenden Substratschicht (22) verbunden ist, derart, daß die Farberscheinung der Teile im wesentlichen einem Farbstandard entspricht, wenn die Teile an ein Fahrzeug montiert werden, wobei das Verfahren folgende Schritte umfaßt:

(a) Aufbringen des Farbmaterials, das Metallflocken enthält, auf die obere Außenfläche der Blattschicht (20) und Backen für eine genügend lange Zeit, um die Farbe angemessen zu trocknen;

(b) Beschichten der unteren Außenfläche der Blattschicht mit einer Klebeschicht;

(c) Erhitzen der Blattschicht (20) auf eine Temperatur, bei der die Blattschicht (20) genügend biegsam für die Vakuumverformung wird;

(d) Positionieren der erhitzten Blattschicht (20) über die Substratschicht (22) und Erzeugen eines Vakuums unterhalb des Substrats durch Abziehen von Luft oder eines anderen Fluidmediums, durch Vakuumöffnungen (16), die unterhalb des Substrats liegen, so daß die Blattschicht (20) dadurch einem Ziehprozeß ausgesetzt ist, der im wesentlichen alle Metallflocken, die in der Farbschicht enthalten sind, ausrichtet, so daß die Farberscheinung der Vielzahl der Teile im wesentlichen einem Farbstandard entspricht; und (e) Vakuumverformen des gezogenen Blattes über die Substratschicht (22) und Veranlassen des Anhaftens der Blattschicht (20) an der Substratschicht (22).

2. Verfahren nach Anspruch 1, dadurch gekennzeichnet, daß das Klebemittel, das in Schritt (b) benutzt wird, ein druckempfindliches Klebemittel ist, und daß in Schritt (d) der Ziehprozeß durchgeführt wird, um im wesentlichen alle Metallflocken, die in der Farbschicht enthalten sind, auf einen Ruhewinkel von weniger als 10° auszurichten, so daß die Vielzahl von Teilen alle dieselbe Farberscheinung haben.

3. Verfahren nach Anspruch 1, dadurch gekennzeichnet, daß das Klebemittel, das in Schritt (b) benutzt wird, ein Klebemittel ist, das aktiviert ist, wenn es erhitzt wird, und daß in Schritt (b) die Blattschicht (20) auf eine Temperatur erhitzt wird, bei der die Klebeschicht aktiviert worden ist.

Fig.1

Fig.2

Fig.3

Fig.4

Fig.5

Fig.6

Fig.7

Fig.8